# EUROPÄISCHE PATENTSCHRIFT

(11) **EP 0 683 805 B1**
(45) Veröffentlichungstag und Bekanntmachung des Hinweises auf die Patenterteilung: **20.10.2004**
(21) Anmeldenummer: 94907539.4
(22) Anmeldetag: 10.02.1994
(51) Int. Cl.: C08K 5/521, C08K 5/5333, C08J 9/00, C08G 18/10, C09K 3/30

(54) **PREPOLYMERZUSAMMENSETZUNG FÜR DÄMMSCHÄUME**
PREPOLYMER COMPOSITION FOR INSULATING FOAMS
COMPOSITION PREPOLYMERE POUR MOUSSES ISOLANTES

(30) Priorität: 10.02.1993 DE 4303849; 10.02.1993 DE 4303848
(43) Veröffentlichungstag der Anmeldung: 29.11.1995
(73) Patentinhaber: RATHOR AG, 9050 Appenzell (CH)
(72) Erfinder: PAULS, Mathias, CH-9050 Appenzell (CH); SCHUMACHER, René, CH-9403 Goldach (CH)
(74) Vertreter: Thiel, Christian, Dr. Dipl.-Chem.
(86) Internationale Anmeldenummer: PCT/EP1994/000385
(87) Internationale Veröffentlichungsnummer: WO 1994/018268

(56) Entgegenhaltungen:
- EP-A- 0 108 713
- EP-A- 0 118 171
- EP-A- 0 462 438
- EP-A- 0 480 342
- WO-A-92/16573
- DE-A- 4 025 843
- DE-C- 3 837 351

## Beschreibung

Die Erfindung betrifft Drückbehälter, enthaltend eine Prepolymerzusammensetzung zur Erzeugung von Polyurethandämmschäumen mit feuerhemmenden Eigenschaften, welche aus einer speziellen Prepolymerkomponente mit wenigstens einem PU-Prepolymer mit einem Gehalt an NCO-Gruppen von 4 bis 20 Gew.-% und üblichen Zusatzstoffen sowie einer Treibgaskomponente besteht.

Die erfindungsgemäß zu verwendende Prepolymerzusammensetzung dient zur Erzeugung von Polyurethandämmschäumen, die vor allem zu Dämmzwecken durch Ausschäumen von Hohlräumen eingesetzt werden. Hauptsächliche Anwendungsgebiete sind das Bauwesen, aber auch technische Produkte, bei denen Hohlräume zur Vermeidung von Schwitzwasser-. nestern verfüllt werden müssen. Soweit Einkomponenten-Polyurethanschäume angesprochen sind, werden diese durch Ausbringen der Prepolymerzusammensetzung aus Druckbehältern, beispielsweise Aerosoldosen, mit Hilfe von Treibmitteln an Ort und Stelle mit einem Raumgewicht von 10 bis 50 g/l ausgebracht und verarbeitet. 1K-Schäume sind feuchtigkeitshärtend, d. h. sie können allein mit Hilfe der in der Luft enthaltenden Feuchtigkeit aushärten.

Zweikomponenten-Polyurethanschäume benötigen zum Aushärten der Prepolymerzusammensetzung eine zweite hydroxylhaltige Komponente, in der Regel ein Polyol, das unmittelbar vor der Schaumbildung zugesetzt werden muß. Die Aushärtung kann durch Katalysatoren beschleunigt werden. Raumgewichte bei 2K-Schäumen liegen typischerweise bei 10 bis 100 g/l.

Übergangsformen zwischen 1K- und 2K-Schäumen sind möglich. In diesem Fall wird dem Prepolymer vor dem Ausbringen eine zur Umsetzung der Isocyanatgruppen nicht ausreichende Menge einer Hydroxylkomponente zugesetzt. Auch solche "1,5-K-Schäume" werden erfindungsgemäß umfaßt.

Herkömmliche Prepolymerzusammensetzungen für 1K- und 2K-Polyurethandämmschäume enthalten eine Prepolymerkomponente, die einen Mindestgehalt an reaktiven NCO-Gruppen aufweisen. Das Prepolymer selbst ist ein Polymer geeigneter Viskosität mit endständigen NCO-Gruppen. Geeignete Isocyanate sind beispielsweise Isophorondiisocyanat, als IPDI bezeichnet, Tolylendiisocyanat, auch als TDI bezeichnet (Diisocyanatotoluol), 1,5-Diisocyanatonaphthalin, als NDI bezeichnet, Triisocyanatotrimethylmethan, 1,6-Diisocyanatohexan, als HDI bezeichnet, oder 4,4'-Diisocyanatodiphenylmethan in roher und reiner Form oder als Gemisch. Besonders gebräuchlich ist 4,4'-Diisocyanatodiphenylmethan, auch als MDI bezeichnet, das sowohl in roher Form (Roh-MDI) als auch in Form der reinen 2,4'- und 4,4'-Isomeren oder von deren Mischungen verwandt wird. Ebenso können die beiden gebräuchlichen TDI-Isomeren allein oder in Abmischung eingesetzt werden. Zur Herstellung der Prepolymerkomponente werden solche Isocyanate mit hydroxylgruppenhaltigen Polyethern, Polyestern oder mehrwertigen Alkoholen umgesetzt, wobei darauf geachtet wird, daß das Prepolymer eine für die Zusammen setzung geeignete Viskosität erhält.

In der Bauindustrie zum Einsatz kommende Dämmschäume, sogenannte B2-Schäume, müssen den nationalen Vorschriften entsprechend feuerhemmend eingestellt sein. Dies geschieht herkömmlicherweise dadurch, daß den schaumbildenden Materialien feuerhemmende Substanzen zugesetzt werden, insbesondere chlor- oder bromhaltige organische Verbindungen. Besonders bekannt geworden sind Chlor- und Bromderivate von Diphenylether und Biphenyl, beispielsweise Pentabrombiphenylether und polychlorierte Biphenyle. Diese Stoffe sind, trotz ihrer hervorragenden feuerhemmenden Eigenschaften, aus toxikologischen Gründen in Verruf geraten. Soweit ihre Zulassung noch nicht erloschen ist, sind Auslauffristen vorgesehen. Hinzu kommt, daß Emballagen, die mit derartigen feuerhemmenden Stoffen belastete Schaumbildnerrückstände enthalten, kostenträchtigen Beschränkungen bei der Entsorgung unterliegen. Entsprechendes gilt für die fertigen Schäume, wenn sie nicht mehr gebraucht werden und beseitigt werden müssen.

Aufgabe der Erfindung ist daher die Bereitstellung eines PU-Prepolymers, das ohne die Verwendung der bisher verwandten chlor- und bromhaltigen organischen Materialien feuerhemmend eingestellt werden kann und damit in der Prepolymerkomponente halogenfrei ist.

Dieses Ziel wird mit einer Prepolymerzusammensetzung mit den Merkmalen des Anspruchs 1 erreicht.

Die erfindungsgemäß zum Einsatz kommenden Phosphate und Phosphonate weisen die allgemeinen Formeln O=P(OR)₃ und O=P(OR)₂R auf, worin R in ein und demselben Molekül verschiedene Bedeutungen haben kann und jeweils Alkyl, Aryl, Alkylaryl oder Aralkyl mit bis zu 10 C-Atomen bedeutet.

Erfindungsgemäß enthalten die Prepolymerzusammensetzungen ein PU-Prepolymer auf Basis von bekannten aromatischen Polyisocyanaten und Polyesterpolyolen auf Basis von Ethylenglykol oder Glyzerin und aromatischen Polycarbonsäuren mit einer OH-Zahl von 100 bis 300 und einer OH-Funktionalität von 2 bis 4. Es hat sich gezeigt, daß gerade Polyesterpolyole einen nicht unerheblichen Beitrag zur feuerhemmenden Einstellung der erfindungsgemäßen Prepolymerzusammensetzungen leisten.

Für die Herstellung der erfindungsgemäß zum Einsatz kommenden Prepolymerzusammensetzung werden übliche aromatische Polyisocyanate verwandt. Insbesondere werden dazu mehrfunktionelle Isocyanate mit im Mittel 2 bis 4 Isocyanatgruppen eingesetzt, sowohl in monomerer als auch oligomerer Form. Wie eingangs festgehalten, sind diese Prepolymerzusammensetzungen selbst Reaktionsprodukte aus isocyanatgruppenhaltigen Monomeren oder Oligomeren und damit reaktiven Komponenten, insbesondere hydroxyfunktionellen Verbindungen. Als aromatische Ausgangs-Polyisocyanate kommen die eingangs genannten in Frage wie auch diejenigen, die beispielsweise in der DE-A-42 15 647 genannt sind.

Besonders geeignet für diese Prepolymerzusammensetzungen sind Isocyanat-Prepolymere auf Basis von MDI, TDI und NDI. Die Isocyanat-Prepolymere können monomerarm oder im wesentlichen monomerfrei eingestellt sein.

Der NCO-Gehalt in der zum Einsatz kommenden Prepolymerkomponente liegt zwischen 4 und 20 Gew.-%, vorzugsweise zwischen 6 und 18 Gew.-% und insbesondere zwischen 7 und 13 Gew.-%.

Es hat sich gezeigt, daß die oben näher bezeichneten Polyesterpolyole mit den erfindungsgemäß zugesetzten weichmachenden Phosphaten und Phosphonaten eine synergistische Wirkung entfalten. Als Polyesterpolyole werden solche auf Basis von Ethylenglykol oder Glycerin und aromatischen Polycarbonsäuren eingesetzt. Als geeignet haben sich Polyesterole auf der Basis von Phthalsäure, Isophthalsäure, und Terephthalsäure mit Molekulargewichten von 1000 bis 2000 erwiesen, wobei die Polyolkomponente von Ethylenglykol oder Glycerin gestellt wird. Die bei der Ausbildung des Prepolymers zum Einsatz kommende Polyhydroxyverbindung hat eine Hydroxyfunktionalität im Bereich von 2 bis 4.

Durch Zusatz einer geringen Menge an Polybutadien ist es möglich, die Gebrauchsfähigkeit der erzeugten Schäume zu verbessern und ein voll verschäumbares dimensionsstabiles Dämmaterial zu erhalten. Das Polybutadien kann in Verbindung mit PU-Prepolymeren aus allen üblichen Isocyanaten eingesetzt werden, ist jedoch besonders vorteilhaft in Verbindung mit PU-Prepolymeren auf HDI- und MDI-Basis.

Als geeignete Polybutadiene können insbesondere flüssige Produkte eingesetzt werden, wie sie von der Firma Hüls AG mit einer Viskosität von wenigstens 500 mPa.s bei 20° C angeboten werden. Vorzugsweise beträgt die Viskosität wenigstens 2000 mPa.s bei 20° C und insbesondere etwa 3000 mPa.s bei 20° C. Besonders geeignet ist ein unter der Bezeichnung Polyöl 130 vertriebenes flüssiges Polybutadien mit etwa 75 % 1,4-cis-Doppelbindungen, etwa 24 % 1,4-trans-Doppelbindungen und etwa 1 % Vinyl-Doppelbindungen und einem Molekulargewicht (dampfdruckosmotisch) von etwa 3000. Der Gehalt an flüssigem Polybutadien beträgt erfindungsgemäß 0,01 bis 2 Gew.-% und vorzugsweise 0,05 bis 1 Gew.-%, jeweils bezogen auf die Prepolymerkomponente, der es zugemischt wird.

Geeignete Polybutadiene sind ferner solche Produkte höheren Molekulargewichts, die der Prepolymerzusammensetzung in gelöster Form zugesetzt werden können oder darin in Lösung gebracht werden können. Außerdem können höher molekulare polymere Kohlenwasserstoffe verwandt werden, die Doppelbindungen enthalten.

Das Molekulargewicht geeigneter stabilisierender Zusätze beträgt zweckmäßigerweise 1000 bis 9000, insbesondere bis 5000.

Neben reinem (flüssigem) Polybutadien können auch Copolymere von 1,3-Butadien mit anderen 1,3-Dienen verwandt werden, wie beispielsweise Isopren, 2,3-Dimethylbutadien und Piperylen, wie auch mit vinylaromatischen Verbindungen, etwa Styrol, α-Methylstyrol, Vinyltoluol und Divinylbenzol. Der Gehalt an Comonomeren in den Copolymerisaten soll 50 Mol-% nicht überschreiten. Derartige Copolymerisate werden, sofern sie flüssig oder löslich sind, als unter die Bezeichnung "(flüssiges) Polybutadien" fallend angesehen.

Es wird angenommen, daß die dimensionsstabilisierende Wirkung des Polybutadiens auf dessen Fähigkeit zur Vernetzung in Gegenwart von Sauerstoff beruht.

Wird ein monomerreduziertes Prepolymer eingesetzt, ist dieses beispielsweise durch Entzug des Monomeren in einem Dünnschichtverdampfer erhältlich. Alternativ oder zusätzlich kann (verbliebenes) Isocyanatmonomer mit einem hydroxylgruppenhaltigen Polyether und/oder Polyester und/oder modifiziertem Pflanzenöl umgesetzt werden. Geeignete Pflanzenöle sind solche mit einer OH-Zahl von 100 bis 300, beispielsweise Ricinusöl mit einer OH-Zahl von etwa 160. Erfindungsgemäß ist es ohne weiteres möglich, mit solcherart monomerreduzierten Prepolymerkomponenten stabile Schäume zu erzielen, sofern das Polybutadien zugesetzt wird. Als monomerarm wird eine Prepolymerzusammensetzung mit weniger als 10 % Monomer, insbesondere weniger als 5 % Monomer bezeichnet, als im wesentlichen monomerfrei eine solche mit weniger als 2, vorzugsweise weniger als 1 und insbesondere weniger als 0,5 Gew.-% Monomer, jeweils bezogen auf die Prepolymerkomponente, d. h. die in der Zusammensetzung vorliegende reaktive isocyanathaltige Komponente.

Das Prepolymer kann übliche Zusatzstoffe enthalten, wie beispielsweise Polysiloxane zur Zellregulierung, weitere übliche Flammschutzmittel, Weichmacher, Katalysatoren, Viskositätsregulierer, Farbstoffe und rheologiesteuernde Zusätze. Zweckmäßigerweise hat die Prepolymerzusammensetzung, d. h. das PU-Prepolymer einschließlich aller Zusätze ohne Treibgase, eine Anfangs-Gebrauchsviskosität bei 20° C von 5000 bis 20000 mPa.s und vorzugsweise von 8000 bis 15000 mPa.s. Erfindungsgemäß liegt der Gehalt an NCO-Gruppen im PU-Prepolymer bei 4 bis 20 Gew.-%, vorzugsweise bei 6 bis 18 Gew.-% und insbesondere bei 7 bis 13 Gew.-%, jeweils bezogen auf die Prepolymerkomponente.

Zur Erhöhung der feuerhemmenden Wirkung der erfindungsgemäß erzeugten Dämmschäume kann es zweckmäßig sein, weitere flammhemmende Additive zuzusetzen, die auch in diesem Fall frei von Chlor und Brom sein sollten. Als besonders geeignet haben sich Melamin und Melaminderivate erwiesen, beispielsweise Melaminphosphat, Dimelaminphosphat und Melamincyanurat, sowie Cyandiamid, Dicyandiamid, Aluminiumtrihydrat, Ammoniumpolyphosphat, insbesondere in fein verkapselter Form, ebenso roter Phosphor. Diese Mittel werden in fein verteilter Form oder als Emulsion zugesetzt. In der Regel ist ein Benetzungsmittel zur Stabilisierung der Prepolymerzusammensetzung ebenfalls erforderlich. Es können übliche Benetzungsmittel verwandt werden.

Die erfindungsgemäß zu verwendende Prepolymerzusammensetzung enthält insbesondere Propan, Butan und/oder Dimethylether als Treibgaskomponente. Als weitere Treibgase in der Komponente kommen Fluorkohlenwasserstoffe in Frage, die unter den in einem Druckbehälter herrschenden Druckbedingungen verflüssigbar sind, beispielsweise R 125, R 134a, R 143 und R 152a. Um den Anteil an brennbaren und halogenhaltigen Treibgasen niedrig zu halten, können weitere Gase zugesetzt werden, die unter den in der Druckdose herrschenden Druckbedingungen nicht kondensierbar sind, beispielsweise CO₂, N₂O oder N₂. Hiervon ist insbesondere CO₂ bevorzugt, da es sich z. T. in der Prepolymerkomponente lösen und dadurch zur Schaumbildung beitragen kann, daneben aber auch als gutes Treibmittel wirkt. Wird auf fluorhaltige Treibmittel verzichtet, kann die ganze Prepolymerzusammensetzung halogenfrei eingestellt werden.

Der Treibgaskomponente der Prepolymerzusammensetzung macht zweckmäßigerweise 5 bis 40 Gew.-% aus. Der CO₂-Gehalt im Treibgas kann beispielsweise etwa 5 Gew.-%, bezogen auf die gesamte Treibgaskomponente, betragen. Der Gehalt an unter den herrschenden Druckbedingungen nicht kondensierbaren Gasen sollte so bemessen sein, daß das auf den Leerraum des Druckbehälters bezogene Volumen einen Druck von etwa 8 bis 10 bar ergibt, je nach der einschlägigen nationalen Vorschrift für Druckbehälter (Aerosoldosen). Der Leerraum des Druckbehälters ist der Raum, der von den nicht kondensierten Bestandteilen der Prepolymerzusammensetzung eingenommen wird.

Gegebenenfalls wird das flüssige Butadien der Prepolymerzusammensetzung in Lösung zusammen mit einem Emulgator - beispielsweise in einem Gewichtsverhältnis 80/20 - zugesetzt, vorzugsweise in Lösung mit einem hydroxylgruppenhaltigen Pflanzenöl, das geeignet ist, den Isocyanatgehalt des PU-Prepolymers zu steuern. Als hierfür besonders geeignet hat sich Ricinusöl mit einer OH-Zahl von 160 erwiesen, jedoch können beliebige andere hydroxylgruppenhaltige Pflanzenöle wie auch hydroxylgruppenhaltige Polyether und Polyester eingesetzt werden. Es handelt sich dabei um hydroxylgruppenhaltige Komponenten, wie sie üblicherweise bei der Formulierung von Prepolymerzusammensetzungen zur Modifizierung der Viskosität verwandt werden.

Die erfindungsgemäß zu verwendenden Prepolymerzusammensetzungen können als 1K-, 1,5-K- und 2K-Polyurethanschäume eingesetzt werden. Bei 2K-Schäumen wird die zur Aushärtung des Schaums benötigte Polyolkomponente unf ggf. eine weitere Komponente in bekannter Weise getrennt von der Prepolymerzusammensetzung gehalten und erst unmittelbar vor oder bei der Ausbringung zugesetzt. Die Verfahren hierzu sind vielfach beschrieben und dem Fachmann bekannt, ebenso dafür geeignete Zweikomponenten-Druckdosen mit einem separaten Behälter für die zweite Komponente.

Als zweite Komponente kommen insbesondere übliche Polyole in Frage, insbesondere Glykol, Glycerin und Butandiol. Zur Beschleunigung der Aushärtungsreaktion kann es zweckmäßig sein, dieser zweiten Komponente einen üblichen Katalysator zuzusetzen, beispielsweise Zinndioctoat, Kobaltnaphthenat und -octoat, Dibutylzinndilaurat, Metall-, insbesondere Eisenacetonylacetat, DABCOkristallin® und N-Methyl-2-azanorbornan. Weitere Katalysatoren sind Triethylendiamin, Trimethylaminoethylpiperazin, Pentamethyldiethylentriamin, Tetramethyliminobispropylamin, Bis(dimethyl-aminopropyl)-N-isopropanolamin. Ferner geeignet sind heteroaromatische Amine, wie sie beispielsweise in der DE-A-42 15 647 genannt sind.

Die Erfindung betrifft Druckdosen zur Ausbringung von Polyurethandämmschäumen, die mit einer Prepolymerzusammensetzung und gegebenenfalls einer davon getrennten Polyolkomponente, wie vorstehend beschrieben, gefüllt sind.

Die erfindungsgemäß zu verwendenden Prepolymerzusammensetzungen besitzen den Vorteil, daß sie im wesentlichen frei von Chlor und Brom hergestellt und dennoch feuerhemmend eingestellt werden können, ohne daß übliche halogenhaltige Flammenschutzmittel zugesetzt werden müssen. Dies heißt, daß auf den Zusatz von Flammschutzmitteln für B2-Schäume nach DIN 4102 weitgehend oder vollständig verzichtet werden kann. Die Prepolymerzusammensetzungen sind im wesentlichen halogenfrei eingestellt, d. h. neben halogenhaltigen Flammschutzmitteln kann auch auf Fluorkohlenwasserstoffe als Treibgase verzichtet werden. Es ist ausreichend, daß die Treibgaskomponente Propan, Butan, Dimethylether und/oder CO₂ enthält.

Es hat sich gezeigt, daß diese flammhemmenden Eigenschaften insbesondere den Trialkyl- und Triarylphosphaten und -phosphonaten zukommen. Genannt werden können Diphenylkresylphosphat, Triphenylphosphat, Trikresylphosphat, Triethylphosphat, Dimetylmethanphosphonat und Diethylethanphosphonat. Ferner können genannt werden 2-Ethylhexyldiphenylphosphat und Phosphorsäure-1,3-phenylentetraphenylester, welche unter den Bezeichnungen Posflex 362 und Fyroflex® RDP im Handel erhältlich sind. Solche Phosphate und Phosphonate können in einer Menge von 5 bis 40 Gew.-%, bezogen auf das Prepolymer, in der Prepolymerzusammensetzung zugegen sein. Sie haben den Vorteil, daß sie das in der Prepolymerzusammensetzung austarierte Gleichgewicht aus Prepolymer, Treibmittel und Verdünnern nicht stören, sondern vielmehr stabilisieren, während herkömmliche halogenhaltige Flammschutzmittel in dieses Gleichgewicht eingreifen und nur zu etwa 12 bis 14 Gew.-% zugegen sein können. Gleichzeitig haben sie weichmachende Funktion.

Die erfindungsgemäß zu verwendende Prepolymerzusammensetzung wird auf dem Fachmann an und für sich bekannte Weise hergestellt, wobei bei Verwendung von monomerarmem Prepolymer dieses als solches in den Druckbehälter gegeben wird oder dort entsteht. Dem Prepolymer wird dann ggf. das flüssige Polybutadien, etwa in Abmischung mit einem Tensid und emulgiert in einem hydroxyhaltigen Öl, beispielsweise Ricinusöl, zugesetzt. Das hydroxylhaltige Öl bzw. Ricinusöl dient gleichzeitig der Feineinstellung des NCO-Gehalts des Prepolymeren und der Herabsetzung des Monomergehalts. Anschließend werden die Zusatzstoffe, wie Flammschutzmittel, Stabilisatoren, Weichmacher, Katalysatoren, etc. zugesetzt, wonach der Druckbehälter (Aerosoldose) verschlossen und das Treibmittel aufgedrückt bzw. eingepreßt wird.

Die Erfindung wird durch die nachfolgenden Zusammensetzungen erläutert.

### Beispiele 1 und 2

Desmodur® 44 V 20 L, ein Polyisocyanat mit 31,6 Gew.-% NCO-Gruppen der Firma Bayer, wird unter Schutzgas mit der Polyolkomponente versetzt. Diese besteht aus Desmophen® PU 1578, einem Polyol mit der OH-Zahl 213, Ricinusöl mit einer OH-Zahl von 155, Diphenylkresylphosphat als Weichmacher und Flammhemmer (Disflamoll® DPK), einem üblichen Polysiloxan zur Stabilisierung (Tegostab BF 2270, OH-Zahl 40) und einer 10 %igen Emulsion eines flüssigen Polybutadiens mit einem Molekulargewicht von etwa 3000 und einer Viskosität bei 20° C von 3000 mPa.s in Ricinusöl (Tego® IMR 830 der Firma Goldschmidt; Gewichtsverhältnis Polybutadien/Emulgator 80/20). Als Katalysator wird Texacat® DMDEE (2,2-Dimorpholinodiethylether) zugesetzt.

| Bestandteil | Bsp. 1 | Bsp. 2 |
|---|---|---|
| Desmophen® PU 1578 | 380 | 380 |
| Disflamoll® DPK | 543 | 273 |
| Fyroflex® RDP | - | 270 |
| Tegostab BF 2270 | 20 | 20 |
| Tego® IMR 830 (10 %) * | 50 | 50 |
| Texacat® DMDEE | 7 | 7 |
| Polyol-Mischung (Gew.-Teile) | 1000 | 1000 |
| Polyol-Mischung | 275 g | 275 g |
| Desmodur® 44 V 20 L | 385 g | 385 g |
| R 134a | 75 g | 75 g |
| i-Butan | 30 g | 30 g |
| Dimethylether | 35 g | 35 g |
| Insgesamt | 800 g | 800 g |
| Gasanteil (Gew.-%) | 18 % | 18 % |
| NCO (Gew.-%) | 15,6 | 15,6 |

| | | |
|---|---|---|
| * 10% in Rizinusöl | | |

### Beispiele 3 und 4

Weitere Prepolymerzusammensetzungen wurden nach folgenden Rezepturen analog zu den Beispielen 1 und 2 hergestellt. Die Zusammensetzungen ergeben einen feuerhemmenden Dämmschaum mit guten Dämmeigenschaften.

Es bezeichnen Desmophen® PU 1578 ein Polyesterpolyol auf Phthalsäure/Adipinsäure-Basis der OH-Zahl 213, Amgard® V 82 ein Phosphor-modifiziertes Polyol der OH-Zahl 205, Desmophen VPPU 1654 ein Polyol der OH-Zahl 110, und Ricinusöl ein solches der OH-Zahl 155. Das Treibgas ist die gleiche Mischung wie in Beispielen 1 und 2.

| | Gew.-Teile | |
|---|---|---|
| Bestandteile | 3 | 4 |
| Desmophen® PU 1578 | 280 | 300 |
| Amgard® V 82 | 100 | |
| Desmophen® VPPU | | 223 |
| Disflamoll® | 543 | 400 |
| Tegostab BF 2270 | 20 | 20 |
| Tego® IMR 830 (10 %) | 50 | 50 |
| Texacat® | 7 | 7 |
| Polyolkomp. 3/7 | 1000 | 1000 |
| Polyolkomp. 3/7 | 275 g | 280 g |
| Desmodur® 44 V 20 L | 385 g | 380 g |
| Treibgas | 140 g | 140 g |
| Gesamt | 800 g | 800 g |
| NCO (Gew.-%) | 15,7 | 15,1 |

### Beispiele 5 und 6

Weitere Prepolymerzusammensetzungen wurden nach folgenden Rezepturen analog zu den Beispielen 1 und 2 hergestellt. Die Zusammensetzungen ergeben einen feuerhemmenden Dämmschaum mit guten Dämmeigenschaften.

Als Weichmacher werden Diphenylkresylphosphat (Disflammol® DPK) und Triphenylphosphat (20 %ig in DKP, Disflammol^{R} TPP), eingesetzt. APP 200 B bezeichnet ein aromatisches Polyesterpolyol der Firma Union Carbide.

| | Gew.-Teile | |
|---|---|---|
| Bestandteil | 5 | 6 |
| Desmophen® PU 1578 | 300 | 300 |
| APP 200 B | 200 | |
| Ricinusöl | | 200 |
| Disflamoll® DPK | 423 | |
| TPP | | 423 |
| Tegostab BF 2270 | 20 | 20 |
| Tego® IMR 830 (10 %) | 50 | 50 |
| Texacat® DMDEE | 7 | 7 |
| Polyolkomp. 8/12 | 1000 | 1000 |
| Polyolkomp. 8/12 | 275 g | 280 g |
| Desmodur® 44 V 20 L | 385 g | 380 g |
| Treibgas | 140 g | 140 g |
| Gesamt | 800 g | 800 g |
| NCO (Gew.-%) | 14.9 | 14.9 |

### Beispiele 7 Bis 11

Weitere Prepolymerzusammensetzungen wurden nach folgenden Rezepturen analog zu den Beispielen 1 und 2 hergestellt. Die Zusammensetzungen ergeben einen feuerhemmenden Dämmschaum mit guten Dämmeigenschaften.

Es bezeichnen Securoc® A 5 F ein Aluminiumtrihydrat und Hostaflamm® AP 462 ein Ammoniumpolyphosphat in verkapselter Form bzw. an der Oberfläche funktionell modifiziert. Die Treibgasmischung ist die gleiche, wie in Beispiel 1 und 2.

Unter ständigem Rühren wird die gewünschte Menge des zuvor beschriebenen Gemisches in einen feuchtigkeitsfreien Druckbehälter gegeben und, gegebenenfalls unter Einbringung einer Patrone mit der zweiten Komponente, mit einem mit Ventil versehenen Dom verschlossen. Nach dem Verschließen wird eine abgestimmte Menge Treibgas aufgedrückt. Zweckmäßigerweise werden die einzelnen Komponente der Treibgasmischung nacheinander aufgedrückt und gegebenenfalls in einem zweiten Durchgang noch einmal aufgefüllt. Besonders geeignet ist eine Mischung aus 21,5 % i-Butan und 28,5 % Dimethylether und 50 % Fluorkohlenwasserstoff.

Nachstehend sind monomerreduziert eingestellte Prepolymerzusammensetzungen und Füllanteile für einen Druckbehälter mit einem Füllgrad von 75 % angegeben. Beide Zusammensetzungen ergeben einen Dämmschaum mit guten Gebrauchseigenschaften.

| | Gew.-Teile | | | | |
|---|---|---|---|---|---|
| Bestandteil | 7 | 8 | 9 | 10 | 11 |
| Desmophen PU 1578 | 300 | 300 | 300 | 300 | 300 |
| Disflammol DPK | 468 | 468 | 468 | 468 | 468 |
| Melamincyanurat | 150 | | | | 75 |
| Securoc® A 5 F | | 150 | | | 75 |
| Cyandiamid | | | 150 | | |
| Hostaflamm | | | | 150 | |
| Tegostab BF 2270 | 20 | 20 | 20 | 20 | 20 |
| Benetzungsmittel | 5 | 5 | 5 | 5 | 5 |
| (BYK 160) | | | | | |
| Tego IMR 830(10%) | 50 | 50 | 50 | 50 | 50 |
| Texacat® DMDEE | 7 | 7 | 7 | 7 | 7 |
| Polykomp. 13/17 | 1000 | 1000 | 1000 | 1000 | 1000 |
| Polykomp. 13/17 | 310 g | 310 g | 310 g | 310 g | 310 g |
| Desmodur | | | | | |
| 44 V 20 L | 360 g | 360 g | 360 g | 360 g | 360 g |
| Treibgas | 140 g | 140 g | 140 g | 140 g | 140 g |
| Gesamt | 810 g | 810 g | 810 g | 810 g | 810 g |
| NCO (Gew.-%) | 14.5 | 14.5 | 14.5 | 14.5 | 14.5 |

## Patentansprüche

1. Druckdose zur Erzeugung von Polyurethandämmschäumen mit feuerhemmenden Eigenschaften enthaltend eine Prepolymerzusammensetzung, welche aus einer Prepolymerkomponente mit wenigstens einem PU-Prepolymer mit einem Gehalt an NCO-Gruppen von 4 bis 20 Gew.-% und üblichen Zusatzstoffen, sowie einer Treibgaskomponente besteht, wobei die Prepolymerkomponente einen Gehalt von 5 bis 40 Gew.-%, bezogen auf die Prepolymerkomponente, an weichmachenden Phosphaten und/oder Phosphonaten der Formeln O=P(OR)₃ und O=P(OR)₂R worin in R, gleich oder verschieden, jeweils Aryl, Alkylaryl oder Aralkyl mit bis zu 10 C-Atomen bedeutet, aufweist, **dadurch gekennzeichnet, daß** das PU-Prepolymer eines auf Basis von aromatischen Polyisocyanaten und Polyesterpolyolen auf Basis von Ethylenglykol oder Glycerin und aromatischen Polycarbonsäuren mit einer OH-Zahl von 100 bis 300 und einer OH-Funktionalität von 2 bis 4 ist, und die Prepolymerkomponente im wesentlichen hälogenfrei eingestellt ist.

2. Druckdose nach Anspruch 1, **dadurch gekennzeichnet, daß** das Polyisocyanat eines auf Basis von Naphthalin-1,5-diisocyanat, Tolylendiisocyanat oder Diphenylmethandiisocyanat ist.

3. Druckdose nach Anspruch 1 oder 2, **dadurch gekennzeichnet, daß** die Polyesterpolyole ein Molekulargewicht von 1000 bis 2000 haben.

4. Druckdose nach einem der vorstehenden Ansprüche, **gekennzeichnet durch** einen Gehalt an flüssigem Polybutadien von 0,01 bis 2 Gew.-%.

5. Druckdose nach Anspruch 4, **dadurch gekennzeichnet, daß** das flüssige Polybutadien etwa 75 % 1,4-cis-Doppelbindungen, etwa 24 % 1,4-trans-Doppelbindungen und etwa 1 % Vinyl-Doppelbindungen enthält, ein Molekulargewicht, bestimmt durch Dampfdruckosmose, von etwa 3000 und eine Viskosität bei 20° C von etwa 3000 mPa.s hat.

6. Druckdose nach einem der vorstehenden Ansprüche, **gekennzeichnet durch** einen Treibgasgehalt von 5 bis 40 Gew.-%.

7. Druckdose nach einem der vorstehenden Ansprüche, **dadurch gekennzeichnet, daß** die Treibgaskomponente Propan, Butan und/oder Dimethylether enthält.

8. Druckdose nach einem der vorstehenden Ansprüche, **dadurch gekennzeichnet, daß** die Treibgaskomponente Fluorkohlenwasserstoff enthält.

9. Druckdose nach einem der vorstehenden Ansprüche, **dadurch gekennzeichnet, daß** sie zusätzlich ein flammhemmendes Additiv enthält, das frei von Chlor und Brom ist.

10. Druckdose nach Anspruch 9, **dadurch gekennzeichnet, daß** das flammhemmende Additiv Melamin, Melaminincyanurat, Dimelaminphosphat, Melaminphosphat, Cyandiamid, Dicyandiamid, Aluminiumtrihydrat, Ammoniumpolyphosphat oder eine Mischung derselben ist.

11. Druckdose nach einem der vorstehenden Ansprüche, **gekennzeichnet durch** eine Anfangs-Gebrauchsviskosität des PU-Prepolymers bei 20° C von 5000 bis 20000 mPa.s.

12. Druckdose nach Anspruch 11, **gekennzeichnet durch** eine Anfangs-Gebrauchsviskosität des PU-Prepolymers von 8000 bis 15000 mPa.s.

## Claims

1. A pressure can for producing polyurethane insulating foams with fire-retardant properties comprising a prepolymer composition which consists of a prepolymer component with at least one PU prepolymer with a content of NCO-groups of 4 to 20 wt% and usual additives, as well as a propellant component, wherein the prepolymer component has a content of 5 to 40 wt%, based on the prepolymer component, of softening phosphates and/or phosphonates with the formulae O=P(OR)₃ and O=P(OR)₂R, wherein R, identically or differently, means aryl, alkyaryl or aralkyl with up to 10 C atoms, **characterized in that** the PU prepolymer is one based on aromatic polyisocyanates and polyester polyols based on ethylene glycol or glycerine and aromatic polycarboxylic acids with a hydroxyl number of 100 to 300 and a hydroxy functionality of 2 to 4, and the prepolymer component is substantially halogen-free.

2. A pressure can according to claim 1, **characterized in that** the polyisocyanate is one based on naphtalene-1,5-diisocyanate, tolylene diisocyanate or diphenylmethane diisocyanate.

3. A pressure can according to claim 1 or 2, **characterized in that** the polyester polyols have a molecular weight of 1000 to 2000.

4. A pressure can according to one of the preceding claims, **characterized by** a content of liquid polybutadiene of 0.01 to 2 wt%.

5. A pressure can according to claim 4, **characterized in that** the liquid polybutadiene contains about 75% 1,4-cis double bonds, about 24% 1,4-trans double bonds and about 1% vinyl double bonds and has a molecular weight, determined by vapor-pressure osmosis, of about 3000 and a viscosity at 20°C of about 3000 mPa·s.

6. A pressure can according to one of the preceding claims, **characterized by** a propellant content of 5 to 40 wt%.

7. A pressure can according to one of the preceding claims, **characterized in that** the propellant component contains propane, butane and/or dimethylether.

8. A pressure can according to one of the preceding claims, **characterized in that** the propellant component contains fluorocarbon.

9. A pressure can according to one of the preceding claims, **characterized in that** it additionally contains a flame-retardant additive which is free from chlorine and bromine.

10. A pressure can according to claim 9, **characterized in that** the flame-retardant additive is melamine, melamine cyanurate, dimelamine phosphate, melamine phosphate, cyanodiamide, dicyanodiamide, aluminum trihydrate, ammonium polyphosphate or a mixture thereof.

11. A pressure can according to one of the preceding claims, **characterized by** an initial service viscosity of the PU prepolymer at 20°C of 5000 to 20000 mPa·s.

12. A pressure can according to claim 11, **characterized by** an initial service viscosity of the PU prepolymer of 8000 to 15000 mPa·s.

## Revendications

1. Cartouche pour l'obtention de mousses d'isolation en polyuréthanne ayant des propriétés ignifuges, contenant une composition de prépolymère, qui consiste en un composant prépolymère comportant au moins un prépolymère de PU ayant une teneur en groupes NCO de 4 à 20 % en poids et des additifs classiques, ainsi qu'un composant gaz propulseur, tandis que le composant prépolymère présente une teneur de 5 à 40 % en poids, par rapport au composant prépolymère, de phosphates et/ou phosphonates plastifiants de formules O=P(OR)₃ et O=P(OR)₂R, où R représente à chaque fois un groupe, identique ou différent, aryle, alkylaryle ou aralkyle ayant jusqu'à 10 atomes de C, **caractérisée en ce que** le prépolymère de PU est un prépolymère de PU à base de polyisocyanates aromatiques et de polyesterpolyols à base d'éthylèneglycol ou de glycérine et d'acides polycarboxyliques aromatiques ayant un indice de OH de 100 à 300 et une fonctionnalité OH de 2 à 4, et le composant prépolymère est ajusté pour être essentiellement exempt d'halogène.

2. Cartouche selon la revendication 1, **caractérisée en ce que** le polyisocyanate est un polyisocyanate à base de naphtalène-1,5-diisocyanate, de tolylènediisocyanate ou de diphénylméthanediisocyanate.

3. Cartouche selon la revendication 1 ou 2, **caractérisée en ce que** les polyesterpolyols ont une masse moléculaire de 1000 à 2000.

4. Cartouche selon l'une des revendications précédentes, **caractérisée par** une teneur en polybutadiène liquide de 0,01 à 2 % en poids.

5. Cartouche selon la revendication 4, **caractérisée en ce que** le polybutadiène liquide contient environ 75 % de doubles liaisons 1,4-cis, environ 24 % de doubles liaisons 1,4-trans et environ 1 % de doubles liaisons vinyliques, et possède une masse moléculaire, déterminée par osmose à pression de vapeur, d'environ 3000 et une viscosité à 20°C d'environ 3000 mPa.s.

6. Cartouche selon l'une des revendications précédentes, **caractérisée par** une teneur en gaz propulseur de 5 à 40 % en poids.

7. Cartouche selon l'une des revendications précédentes, **caractérisée en ce que** le composant gaz propulseur contient du propane, du butane et/ou de l'éther diméthylique.

8. Cartouche selon l'une des revendications précédentes, **caractérisée en ce que** le composant gaz propulseur contient un hydrocarbure fluoré.

9. Cartouche selon l'une des revendications précédentes, **caractérisée en ce qu'**elle contient en outre un additif ignifigeant, qui est exempt de chlore et de brome.

10. Cartouche selon la revendication 9, **caractérisée en ce que** l'additif ignifugeant est de la mélamine, du cyanurate de mélamine, du phosphate de dimélamine, du phosphate de mélamine, du cyandiamide, du dicyandiamide, du trihydrate d'aluminium, du polyphosphate d'ammonium ou un mélange de ceux-ci.

11. Cartouche selon l'une des revendications précédentes, **caractérisée par** une viscosité initiale à l'emploi du prépolymère de PU à 20°C de 5000 à 20000 mPa.s.

12. Cartouche selon la revendication 11, **caractérisée par** une viscosité initiale à l'emploi du prépolymère de PU de 8000 à 15000 mPa.s.
